# EUROPÄISCHE PATENTSCHRIFT

(11) **EP 1 695 908 B1**
(45) Veröffentlichungstag und Bekanntmachung des Hinweises auf die Patenterteilung: **26.10.2011**
(21) Anmeldenummer: 06003776.9
(22) Anmeldetag: 24.02.2006
(51) Int. Cl.: B64D 9/00, B60P 1/36

(54) **Ladevorrichtung zum zumindest teilautomatischen Beladen und Entladen eines Frachtraums eines Verkehrsmittels sowie Fördereinrichtung**
Loading device for at least partially atomatically load and unload a cargo bay of a vehicle and conveying device
Appareil de chargement , pour au moins partiallement, charger automatiquement la soute d'un vehicule et dispositif transporteur

(30) Priorität: 24.02.2005 DE 102005008443
(43) Veröffentlichungstag der Anmeldung: 30.08.2006
(73) Patentinhaber: Airbus Operations GmbH, 21129 Hamburg (DE)
(72) Erfinder: Jacobsen, Rüdiger, 28844 Weyhe (DE); Vogel, Thomas, Dipl.-Ing., 27299 Langwedel-Etelsen (DE)
(74) Vertreter: Klöpper, Ute

(56) Entgegenhaltungen:
- EP-A- 1 275 579
- EP-A- 1 415 908
- DE-A1- 4 136 972
- US-A- 4 225 926

## Beschreibung

Die Erfindung betrifft eine Ladevorrichtung zum zumindest teilautomatischen Beladen und Entladen eines Frachtraums eines Luftfahrzeuges mit mindestens einer Fördereinrichtung zur Positionierung von Frachteinheiten im Bereich einer Grundfläche des Frachtraums und mit mindestens einem Führungsmittel sowie mit mindestens einer Bewegungshilfe im Bereich der Grundfläche des Frachtraums beansprucht in Anspruch 1.

Weiterhin betrifft die Erfindung eine Fördereinrichtung, insbesondere für eine Ladevorrichtung zum zumindest teilautomatischen Beladen und Entladen eines Frachtraums eines Luftfahrzeuges, mit mindestens einem Förderorgan, insbesondere mit mindestens einer angetriebenen Transportrolle beansprucht in Anspruch 11.

Bekannte Ausführungsformen von Ladevorrichtungen für Luftfahrzeuge zum teilautomatischen Beladen und Entladen von Frachteinheiten sind unmittelbar im Frachtraum bzw. in dessen Grundfläche integriert. Derartige Ladevorrichtungen weisen unter anderem eine Vielzahl von Fördereinrichtungen, Führungsmitteln und Bewegungshilfen auf und dienen zur zumindest teilautomatischen Be- und Entladung von Frachträumen mit standardisierten Frachteinheiten mit minimalem Personalaufwand.

Die Bewegungshilfen sind beispielsweise als Rollenbahnen, Kugelmatten oder dergleichen ausgebildet und erleichtern durch die Verringerung der Reibung zwischen der Grundfläche und der Unterseite der Frachteinheiten eine Positionierung der Frachteinheiten auf der Grundfläche des Frachtraums.

Die Führungsmittel dienen zum einen dazu, eine sichere Führung der Frachteinheiten während der Positionierung durch die Fördereinrichtungen sicher zu stellen. Die Führungsmittel verhindern beispielsweise das Verklemmen oder Verkeilen der Frachteinheiten untereinander oder innerhalb des Frachtraums. Zum anderen haben die Führungsmittel die Aufgabe, die einzelnen Frachteinheiten nach der erfolgten Positionierung im Frachtraum gegen unbeabsichtigtes Verrutschen während des Transportvorganges sicher zu fixieren. Zur Fixierung der Frachteinheiten sind auf der Grundfläche des Frachtraums weitere Sicherungsmittel, beispielsweise Sperrklinken, aufstellbare Rastelemente oder dergleichen, angeordnet. Die Führungsmittel sind im Wesentlichen parallel zu der Längsachse des Flugzeugs im Frachtraum angeordnet.

Die Frachteinheiten weisen standardisierte Abmessungen auf und sind beispielsweise als Paletten oder Container ausgebildet. Die Frachteinheiten weisen weiterhin Führungsorgane auf, die in die im Bereich des Frachtraums angeordneten Führungsmittel einbringbar sind. So sind beispielsweise seitlich an den Frachteinheiten so genannte z-Führungen angeordnet, die in korrespondierend hierzu ausgebildete Nuten der im Bereich der Frachtraumwände angeordneten Führungsmittel einbringbar sind. Die Frachteinheiten lassen sich somit im Bereich der Führungsmittel nur parallel zur Längsachse des Flugzeugs im Frachtraum verschieben. Bewegungen der Frachteinheiten in der Querrichtung zur Längsachse des Flugzeugs oberhalb eines Toleranzbereichs werden unterbunden, sodass die Frachteinheiten gegen unkontrollierte Querbewegungen gesichert sind. Infolge der z-Führungen sind die Frachteinheiten darüber hinaus auch gegen ein "Abheben" von der Grundfläche des Frachtraums parallel zu dessen Hochachse gesichert, was beispielsweise bei Turbulenzen oder schnellen Sinkflügen von Bedeutung ist.

Die Fördereinrichtungen bekannter Beladungs- und Entladungsvorrichtungen weisen unter anderem mindestens eine motorisch angetriebene und vorzugsweise rutschhemmend ausgebildete Transportrolle auf. Durch die rutschhemmende Ausbildung der Transportrollen in den Fördereinrichtungen wird die Traktion zwischen der Unterseite der Frachteinheiten oder der Transportrolle verbessert. Die Frachteinheiten liegen mit ihren Unterseiten jeweils zumindest bereichsweise auf den Transportrollen der Fördereinrichtungen auf, so dass die Frachteinheiten mittels der Fördereinrichtungen auf der Grundfläche im Frachtraum in einer Richtung des Raumes bewegbar sind. Die Bewegung einer aufliegenden Frachteinheit kann hierbei nur in einer Raumrichtung erfolgen, die sich senkrecht zur Drehachse der Transportrolle befindet. Die Bewegung der Frachteinheiten erfolgt darüber hinaus im Wesentlichen parallel zur Grundfläche des Frachtraums. Eine Vielzahl von Fördereinrichtungen sind über die Grundflächen des Frachtraums hinweg vorzugsweise gleichmäßig zueinander beabstandet angeordnet. Die (Längs-)Fördereinrichtungen für die Bewegung der Frachteinheiten in Richtung der Längsachse des Flugzeugs sind hierbei so in die Grundfläche des Frachtraums integriert, dass die Drehachsen der Transportrollen dieser Fördereinrichtungen in etwa quer zur Längsachse des Flugzeugs ausgerichtet sind. Um die Frachteinheiten auch quer zur Längsrichtung des Flugzeugs bewegen zu können, sind weitere Fördereinrichtungen in der Grundfläche um 90° verdreht integriert, so dass die Drehachsen der Transportrollen dieser (Quer-)Fördereinrichtungen im Wesentlichen parallel zur Längsachse des Flugzeugs ausgerichtet sind. Der räumliche Abstand zwischen den Fördereinrichtungen ist hierbei vorzugsweise so gewählt, dass jeweils mindestens zwei Fördereinrichtungen gleichzeitig Kontakt zu einer Unterseite einer Frachteinheit haben. Weiterhin sind in den Fördereinrichtungen so genannte "Scrab"-Sensoren und optische Sensoren integriert.

Der optische Sensor dient zur Detektion einer im Bereich der betreffenden Fördereinrichtung aufliegenden Frachteinheit, sodass nur diejenigen Fördereinrichtungen von einer Steuer- und Regeleinrichtung eingeschaltet werden, auf denen auch tatsächlich eine Frachteinheit aufliegt. Hierdurch wird der Stromverbrauch der gesamten Vorrichtung optimiert. Der optische Sensor arbeitet bevorzugt berührungslos mit einer Strahlungsquelle und einem Strahlungsdetektor nach dem Prinzip einer Reflexionslichtschranke. Der optische Sensor kann hierbei im gesamten elektromagnetischen Spektrum arbeiten.

Ein so genannter "Scrab"-Sensor erfasst die Bewegung einer aufliegenden Frachteinheit jeweils in der Transportrichtung der betreffenden Fördereinrichtung. Der mechanisch wirkende "Scrab"-Sensor umfasst im Wesentlichen ein Laufrad, das über eine Rutschkupplung mit der Transportrolle verbunden ist. Das Laufrad weist einen etwas größeren Durchmesser als der Durchmesser der Transportrolle in der Fördereinrichtung auf, um einen sicheren mechanischen Kontakt zu einer aufliegenden Frachteinheit zu gewährleisten. In das Laufrad sind Permanentmagnete zur Erfassung der Bewegungen des Laufrades eingebracht. Mittels eines Hall-Sensors lässt sich die Rotationsgeschwindigkeit des Laufrades erfassen und über eine Steuer- und Regeleinrichtung auswerten. Die Rotationsgeschwindigkeit des Laufrades ist im unbelasteten Zustand der Fördereinrichtung gleich der Rotationsgeschwindigkeit der Transportrolle. Liegt jedoch eine Frachteinheit auf der Fördereinrichtung auf, so wird durch den wesentlich höheren Reibwert zwischen dem Laufrad des "Scrab"-Sensors und der Unterseite der Frachteinheit die Rotationsgeschwindigkeit des Laufrades - auch bei einer durchrutschenden Transportrolle - im Wesentlichen durch die tatsächliche Fortbewegungsgeschwindigkeit der Frachteinheit über der Fördereinrichtung bestimmt. Somit kann die Steuer- und Regeleinrichtung die Bewegungen der Frachteinheiten im Frachtraum detektieren und entsprechend steuern. Ein "Scrab"-Sensor ist jedoch nur in der Lage, die Bewegung einer Frachteinheit in der Raumrichtung zu ermitteln, die senkrecht zur Drehachse der Transportrolle der betreffenden Fördereinrichtung liegt.

Sowohl die Fördereinrichtungen als auch die Bewegungshilfen sind im Wesentlichen im Bereich einer Grundfläche des zu beladenden Flugzeugfrachtraums integriert, während die Führungsmittel auch im Bereich der Frachtraumwände angeordnet sein können. Die Fördereinrichtungen und die Bewegungshilfen schließen im Wesentlichen bündig mit der Grundfläche des Frachtraums ab, um eine durchgehende Beladungsebene zu bilden.

Aufgrund der im Wesentlichen rein mechanischen Wirkungsweise sind die "Scrab"-Sensoren stör- und verschleißanfällig. Darüber hinaus können die bekannten "Scrab"-Sensoren die Bewegungsgeschwindigkeit, die Beschleunigung bzw. die Position einer aufliegenden Frachteinheit nur in Richtung jeweils einer Raumdimension, also beispielsweise in Richtung der Längs- oder Querachse des Flugzeugs, erfassen. Auf Grund begrenzter Platzverhältnisse in den Frachträumen moderner Flugzeuge ist es jedoch oft erforderlich, die Frachteinheiten zusätzlich um ihre Hochachse herum zu verschwenken, sodass ein zur Erfassung von Drehbewegungen geeigneter Sensor eine simultane Erfassung der Bewegung bzw. der Position einer Frachteinheit sowohl in der Richtung der Längsachse des Flugzeugs als auch quer hierzu erlauben muss. Ferner ist es bislang erforderlich, jede Fördereinrichtung sowohl mit einem optischen Sensor zur Erfassung einer aufliegenden Frachteinheit als auch mit einem, im Wesentlichen mechanisch arbeitenden "Scrab"-Sensor auszustatten, um zumindest die Bewegungsrichtung einer Frachteinheit senkrecht zur Drehachse der Transportrolle der Fördereinrichtung, parallel zu der Grundfläche des Frachtraums, erfassen zu können.

Aus der US 4,225,926, welche den nächstliegenden, bekannten Stand der Technik darstellt, ist eine Vorrichtung zum Beladen und Entladen eines Flugzeugs bekannt, bei der das Gewicht der gesamten Frachtzuladung des Flugzeugs ermittelt wird.

Dies wird durch eine im Eingangsbereich des Frachtraums unterhalb einer Kugelmatte angeordnete Wiegezelle erreicht, die jede Frachteinheit passieren muss. Die so ermittelten Einzelgewichte der Frachteinheiten werden in einer elektronischen Steuer- und/oder Regeleinrichtung aufsummiert. Die Positionierung der Frachteinheiten im Frachtraum erfolgt mittels Führungsschienen und passiver und motorisch angetriebener Rollen. Die Erfassung der räumlichen Position der Frachteinheiten entlang der Flugzeuglängsachse geschieht mit Lichtschranken oder mit Reflexlichtschranken, die in hintereinanderliegenden Frachtraumabschnitten angeordnet sind.

In der DE 41 36 972 A1 ist eine Vorrichtung zum Positionieren von Lasten in Flugzeugfrachträumen offenbart.

Aus dieser Vorrichtung ist eine Anwesenheitskontrolle einer im Bereich einer Förderrolle aufliegenden Last mittels berührungsloser Sensoren bekannt, um die Betriebszeit der Förderrollen und damit die Belastung der elektrischen Energieversorgung des Flugzeugbordnetzes zu verringern.

Aus der EP 1 415 908 A2 ist ein Frachtladesystem mit mindestens einer Antriebsrolleneinheit bekannt, um in Führungsschienen geführte Frachteinheiten auf einem Frachtdeck eines Flugzeuges zu positionieren. Im Bereich der mindestens einen Antriebsrolle ist eine Messrolle vorgesehen, wobei in Abhängigkeit von der Drehzahl und/oder einer auf die Messrolle senkrecht wirkenden Kraft die Elektromotoren der Antriebsrolleneinheiten entsprechend geregelt werden. Alternativ wird eine Geschwindigkeitsmessung aufliegender Frachteinheiten mit zwei in Transportrichtung hintereinander angeordneten Reflexionslichtschranken offenbart.

Aus der EP 1 275 579 A2 ist ferner ein Frachtladesystem für Flugzeuge bekannt, bei dem jede individuell anhebbare und absenkbare Antriebsrolleneinheit mit einem optischen Reflexsensor ausgestattet ist. Der Sensor dient lediglich zur Anwesenheitskontrolle einer Frachteinheit im Bereich einer Antriebsrolleneinheit, um für den Transport nicht benötigte, freie Antriebsrolleneinheiten zur Entlastung des elektrischen Flugzeugbordnetzes kontrolliert abzuschalten.

Aufgabe der Erfindung ist es, eine zumindest teilautomatische Ladevorrichtung für einen Frachtraum mit motorischen Fördereinrichtungen, insbesondere für einen Frachtraum in einem Luftfahrzeug, zu schaffen, die eine verbesserte Steuerung des Bewegungsablaufs der in den Frachtraum zu verbringenden Frachteinheiten bei einer zugleich hohen Betriebssicherheit und einer geringen Wartungsintensität erlaubt. Ferner ist es eine Aufgabe der Erfindung, eine derartige Fördereinrichtung anzugeben.

Diese Aufgabe wird zunächst durch eine Ladevorrichtung mit den Merkmalen des Patentanspruchs 1 gelöst.

Dadurch, dass jede Fördereinrichtung mindestens ein Sensormittel aufweist, wobei mittels des Sensormittels oder der Sensormittel die Anwesenheit einer Frachteinheit im Bereich der Fördereinrichtung berührungslos erfassbar ist und die Position sowie die Geschwindigkeit einer Frachteinheit auf der Grundfläche des Frachtraums in mindestens zwei Raumdimensionen berührungslos ermittelbar ist, wobei die Fördereinrichtungen in Abhängigkeit von Messsignalen des Sensormittels oder der Sensormittel mittels einer Steuer- und Regeleinrichtung derart ansteuerbar sind, dass eine Frachteinheit beliebig auf der Grundfläche des Frachtraums positionierbar ist, soweit die Führungsmittel dies zulassen,
ergibt sich ein weitgehend verschleißfreier und wartungsarmer Betrieb der Fördereinrichtungen im Frachtraum eines Verkehrsmittels, insbesondere eines Flugzeugs.

Darüber hinaus braucht jede Fördereinrichtung nur noch ein Sensormittel aufzuweisen, das gleichzeitig die Aufgabe des "Scrab"-Sensors und des bisherigen optischen Sensors übernimmt. Ferner lassen sich die Positionen und die Geschwindigkeiten der Frachteinheiten auf der Grundfläche des Frachtraums mittels des neuartigen Sensormittels durch die Fördereinrichtung in mindestens zwei Raumdimensionen, das heißt also beispielsweise gleichzeitig in der x-Richtung und der y-Richtung des Raums, erfassen. Infolge der Bestimmung von Position und Geschwindigkeit der Frachteinheiten in mindestens zwei Richtungen des Raumes, ist eine genauere Steuerung des Bewegungsablaufs der Frachteinheiten auf der Grundfläche des Frachtraums und insbesondere eine präzise Steuerung von Rotationsbewegungen der Frachteinheiten um deren Hochachse bzw. um die z-Achse möglich. Durch eine geeignete Ansteuerung der Fördereinrichtungen mittels einer Steuer- und Regeleinrichtung lassen sich die Frachteinheiten somit auf der Grundfläche des Frachtraums mittels der erfindungsgemäßen Ladevorrichtung in weiten Grenzen frei positionieren. Infolge des Vorhandenseins von nur noch einem Sensormittel in jedem Fördermittel verringert sich darüber hinaus die Ausfallwahrscheinlichkeit der gesamten Ladevorrichtung.

Nach Maßgabe einer vorteilhaften Ausgestaltung der Erfindung ist mittels des Sensormittels oder der Sensormittel die Beschleunigung einer Frachteinheit auf der Grundfläche des Frachtraums in mindestens zwei Raumdimensionen berührungslos erfassbar.

Durch diese Ausgestaltung wird als zusätzliche Steuerungsinformation die Erfassung der Beschleunigung einer Frachteinheit in mindestens zwei Richtungen des Raumes ermöglicht.

Eine weitere vorteilhafte Ausgestaltung der Erfindung sieht vor, dass das Sensormittel oder die Sensormittel mit berührungslos wirkenden Komponenten, insbesondere mit optoelektronischen Komponenten, gebildet sind.

Hierdurch ist ein weitgehend verschleißfreier und daher wartungsarmer Betrieb der Fördereinrichtungen innerhalb der Ladevorrichtung möglich.

Weitere vorteilhafte Ausgestaltungen der Anordnung sind in den weiteren Patentansprüchen dargelegt.

Darüber hinaus wird die Aufgabe durch eine Fördereinrichtung nach Maßgabe des Patentanspruchs 11 gelöst.

Dadurch, dass jede Fördereinrichtung mindestens ein Sensormittel aufweist, wobei mittels des Sensormittels oder der Sensormittel die Anwesenheit einer Frachteinheit im Bereich der Fördereinrichtung berührungslos erfassbar ist und die Position sowie die Geschwindigkeit einer Frachteinheit auf der Grundfläche in mindestens zwei Raumdimensionen berührungslos erfassbar ist,
ist ein weitgehend verschleißarmer und wartungsfreier Betrieb der in eine Ladevorrichtung zum zumindest teilautomatischen Beladen und Entladen eines Frachtraums eines Verkehrsmittels integrierten erfindungsgemäßen Fördereinrichtung möglich. Ferner ermöglicht die Erfassung der Position einer Frachteinheit auf der Grundfläche des Frachtraums in mindestens zwei Raumdimensionen die Steuerung komplexer Bewegungsabläufe der Frachteinheiten auf der Grundfläche des Frachtraums. Weiterhin verringert sich die statistische Ausfallwahrscheinlichkeit der gesamten Ladevorrichtung durch das Vorhandensein von nur noch einem Sensormittel pro Fördereinrichtung.

In der Zeichnung zeigt:
- **Fig. 1**: Eine schematische Darstellung der erfindungsgemäßen Ladevorrichtung innerhalb eines in einem Heckbereich eines Flugzeugs angeordneten Frachtraums in einer Draufsicht und
- **Fig. 2**: eine Detaildarstellung einer Fördereinrichtung als Bestandteil der erfindungsgemäßen Ladevorrichtung in einer Draufsicht.

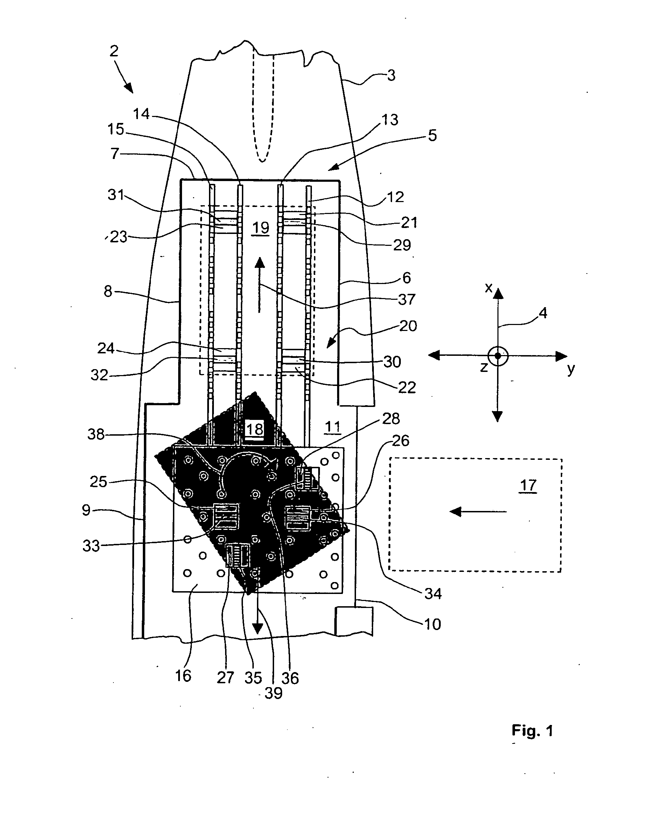

Die **Fig. 1** zeigt eine schematische Darstellung der erfindungsgemäßen Ladevor-richtung innerhalb eines in einem Heckbereich eines Flugzeugs angeordneten Frachtraums in einer Draufsicht.

Die erfindungsgemäße Ladevorrichtung 1 ist im gezeigten Ausführungsbeispiel in einem Heckbereich 2 eines Flugzeugs 3 integriert. Zur Verdeutlichung der drei Richtungen im Raum ist ein rechtwinkliges Koordinatensystem 4 in der Fig.1 mit einer x-, einer y- sowie einer z-Achse dargestellt. Ein Frachtraum 5 ist von den Frachtraumwänden 6 bis 9 umschlossen. Ein Ladetor 10 dient zum Verschließen des Frachtraums 5 nach der Ladung bzw. zur Entladung. Auf einer Grundfläche 11 des Frachtraums 5 sind im hinteren Bereich die Rollenbahnen 12 bis 15 als Bewegungshilfe angeordnet. Im Bereich des Ladetors 10 ist eine Kugelmatte 16 als Bewegungshilfe angeordnet. Die Kugelmatte 16 umfasst eine Vielzahl, in der Skizze der Fig. 1 durch kleine Kreise angedeutete, matrixförmig angeordnete Kugeln, deren Oberflächen zumindest bereichsweise aus Bohrungen in der Kugelmatte 16 herausragen. Die Kugeln sind in mindestens zwei Raumrichtungen in der Kugelmatte 16 leicht drehbar aufgenommen. Die Rollenbahnen 12 bis 15 sowie die Kugelmatte 16 erleichtern die Positionierung der Frachteinheiten 17,18,19 auf der Grundfläche 11, insbesondere im Bereich des Ladetors 10.
Die Rollenbahnen 12 bis 15 erlauben hierbei im Wesentlichen eine Bewegung der Frachteinheiten 17,18,19 in der x-Richtung, während die Frachteinheiten 17,18,19 im Bereich der Kugelmatte sowohl in der x-Richtung als auch in der y-Richtung verschoben werden können. Im Bereich der Kugelmatte 16 ist beispielsweise auch eine Verdrehung der Frachteinheiten 17,18,19, wie durch die verschwenkt dargestellte Position der Frachteinheit 18 in der Fig. 1 angedeutet, möglich. Von der Darstellung der Fig. 1 abweichende Anordnungen der Bewegungshilfen in Form der Rollenbahnen 12 bis 15 sowie der Kugelmatte 16 sind gleichfalls möglich.
Die Rollenbahnen 12 bis 15 sowie die Kugelmatte 16 sind vorzugsweise derart in die Grundfläche 11 des Frachtraums 5 integriert, dass diese in etwa bündig mit einer Oberseite 20 der Grundfläche 11 abschließen und ein möglichst widerstandsfreies Überfahren mit den Frachteinheiten 17,18,19 ermöglichen.

Die Frachteinheiten 17,18,19 sind als Container, Paletten oder dergleichen ausgebildet und weisen vorzugsweise genormte, standardisierte Außenabmessungen auf. Die Frachteinheiten 17,18,19 dienen zum Transport von Gütern aller Art mittels des Flugzeugs 3.

Weiterhin sind im Frachtraum 5 im Bereich der Grundfläche 11 und/oder im Bereich der Frachtraumwände 6 bis 9 Führungshilfsmittel zur zumindest bereichsweisen Führung der Frachteinheiten 17,18,19 während des Beladungs- bzw. des Entladungsvorganges angeordnet, die der besseren Übersichtlichkeit halber in der Darstellung der Fig. 1 nicht dargestellt sind.

Die Frachteinheiten 17,18,19 weisen an ihren Längsseiten beispielsweise z-förmig ausgebildete, in der Darstellung der Fig. 1 nicht eingezeichnete, Führungsorgane auf, die zumindest abschnittsweise in entsprechend ausgebildete Nuten der Führungshilfsmittel einbringbar sind. Hierdurch lassen sich die Frachteinheiten 17,18,19 im Wesentlichen nur parallel zur x-Achse frei positionieren, während eine ungewollte Bewegung bzw. ein Verrutschen parallel zur y-Achse, das heißt in Längsrichtung des Flugzeugs, bis auf einen kleinen Toleranzbereich verhindert wird. Darüber hinaus unterbinden die z-förmigen Führungsorgane an den Frachteinheiten 17,18,19 auch eine ungewollte Bewegung der Frachteinheiten 17,18,19 in Richtung der z-Achse, die beispielsweise in der Form des "Abhebens" der Frachteinheiten 17,18,19 von der Grundfläche 11 während des Fluges, insbesondere bei Turbulenzen, schnellen Sinkflügen oder dergleichen, erfolgen kann. Um nach dem Abschluss des Beladungsvorganges eine Verschiebung der Frachteinheiten 17,18,19 auch in Richtung der x-Achse zu vermeiden, sind im Bereich der Oberseite 20 der Grundfläche 11 nicht näher dargestellte Sicherungsmittel, beispielsweise Sperrklinken, aufstellbare Rastelemente oder dergleichen, angeordnet. Nach Abschluss des Beladungsvorganges sind die Frachteinheiten 17,18,19 in der x-, der y- sowie der z-Richtung gegen ungewolltes Verrutschen gesichert.

Zwischen den Rollenbahnen 12 und 13 im hinteren Bereich des Frachtraums 5 sind die (Längs-)Fördereinrichtungen 21 und 22 angeordnet. Zwischen den Rollenbahnen 14 und 15 sind entsprechend die (Längs-)Fördereinrichtungen 23,24 angeordnet. Im Bereich des Ladetors 10 bzw. der Kugelmatte 16 sind darüber hinaus die (Längs-)Fördereinrichtungen 25,26 angeordnet. Weiterhin befinden sich im Bereich der Kugelmatte 16 die (Quer-)Fördereinrichtungen 27 und 28. Die begriffliche Unterscheidung zwischen (Längs-) und (Quer-)Fördereinrichtungen dient allein der besseren Beschreibbarkeit der Transportvorgänge innerhalb des Frachtraums 5. Konstruktiv sind sowohl die (Längs-) als auch die (Quer-)Fördereinrichtungen gleich aufgebaut und unterscheiden sich lediglich hinsichtlich ihrer Ausrichtung bzw. Integration in der Grundfläche 11 des Frachtraums 5. Die (Längs-)Fördereinrichtungen 21 bis 26 erlauben im Wesentlichen einen Transport der Frachteinheiten 17,18,19 in Richtung der x-Achse, während die (Quer-)Fördereinrichtungen 27,28 eine Bewegung der Frachteinheiten 17,18,19 in der hierzu orthogonalen y-Richtung ermöglichen. Die Fördereinrichtung 21 weist eine motorisch angetriebene und von der Steuer- und Regeleinrichtung kontrollierbare Transportrolle 29 auf. Entsprechend hierzu weisen auch die übrigen Fördereinrichtungen 22 bis 28 motorisch angetriebene Transportrollen 30 bis 36 auf. Weiterhin weisen die Fördereinrichtungen 21 bis 28 jeweils ein erfindungsgemäßes, in der Darstellung der Fig. 1 der besseren Übersichtlichkeit halber nicht dargestelltes Sensormittel auf. Mittels der Sensormittel kann die Steuer- und Regeleinrichtung erfassen, ob sich eine Frachteinheit 17,18,19 im Bereich einer Fördereinrichtung 21 bis 28 befindet. Weiterhin kann die Steuer-und Regeleinrichtung auch die exakte Position der Frachteinheiten in der x- und der y-Richtung in Bezug auf die Grundfläche 11 des Frachtraums 5 erfassen.

Die Fördereinrichtungen 21 bis 26 sind im Frachtraum 5 so ausgerichtet, dass die Drehachsen der zugeordneten Transportrollen 29 bis 34 der (Längs-) Fördereinrichtungen 21 bis 26 ungefähr parallel zur y-Achse verlaufen, während die Drehachsen der Transportrollen 35,36 der (Quer-)Fördereinrichtungen 27,28 in etwa parallel zur x-Achse verlaufen.

Die Frachteinheit 19 ist entlang der Richtung des Pfeils 37 mittels der Fördereinrichtungen 21,23 beispielsweise im hinteren Teil des Frachtraums 5 positioniert worden. Die Frachteinheit 18 befindet sich hingegen noch im Bereich des Ladetors 10 im Bereich der Kugelmatte 16 und ist durch eine zeitgleiche Ansteuerung der Fördereinrichtungen 25,26,27,28 mittels der nicht näher dargestellten Steuer- und Regeleinrichtung in Richtung des Drehpfeils 38 um eine Hochachse parallel zur z-Achse verdrehbar bzw. frei positionierbar. Hierdurch kann die Frachteinheit 18, ungeachtet ihrer Erstreckung in der Breite, die in der Querrichtung größer ist, als eine Breite des Frachtraums 5, in Richtung des Pfeils 39 in einem in der Fig. 1 nicht näher dargestellten vorderen Teil des Frachtraums 5 positioniert werden. Im vollständig beladenen Zustand sind auch im Bereich der Kugelmatte 16 Frachteinheiten 17,18,19 positioniert, um die Ladekapazität des Frachtraums 5 möglichst effizient auszunutzen.
Die Frachteinheit 17 befindet sich schließlich noch in einer Warteposition auf einer nicht näher dargestellten Zuführvorrichtung für Frachteinheiten 17,18,19, beispielsweise einem Scherentisch oder dergleichen. Zur Verbringung in den Bereich der erfindungsgemäßen Ladevorrichtung 1 innerhalb des Frachtraums 5 wird die Fracht-Frachteinheit 17 in Richtung des schwarzen Richtungspfeils auf der Zuführeinheit bewegt.

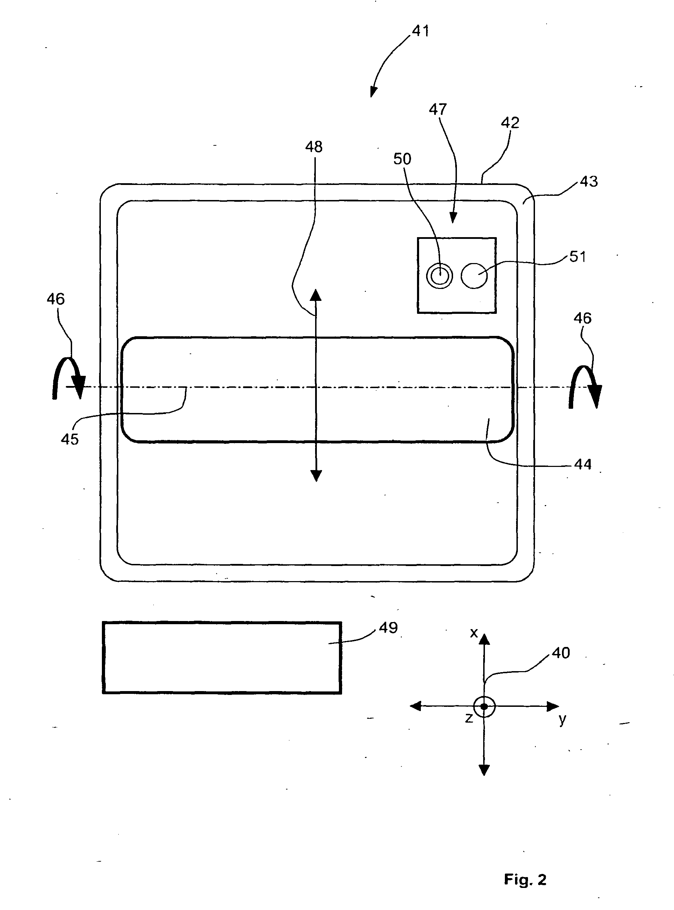

Die Fig. 2 zeigt eine Detaildarstellung eines Ausführungsbeispiels einer Fördereinrichtung für die erfindungsgemäße Ladevorrichtung für Flugzeuge in einer Draufsicht. Ein rechtwinkliges Koordinatensystem 40 verdeutlicht die drei Richtungen im Raum, repräsentiert durch die x-, die y- sowie die z-Achse.

Eine Fördereinrichtung 41 umfasst unter anderem ein Gehäuse 42 mit einem umlaufenden Flansch 43 zur bündigen Integration in eine Grundfläche eines Frachtraums, eine Transportrolle 44, die um eine Drehachse 45 in Richtung der Drehpfeile 46 drehbar im Gehäuse 42 aufgenommen ist sowie ein Sensormittel 47. Auch die übrigen Fördereinrichtungen 21 bis 28 verfügen über derartige, nicht näher dargestellte Sensormittel (vgl. Fig. 1).

Mittels der vorzugsweise mit einer rutschhemmenden Beschichtung versehenen Transportrolle 44 kann eine aufliegende Frachteinheit im Wesentlichen nur in Richtung des Doppelpfeils 48, das heißt parallel zur x-Achse des Koordinatensystems 40 positioniert werden. Die Transportrolle 44 wird weiterhin von einer nicht näher dargestellten elektrischen Antriebseinheit angetrieben.
Weiterhin weist die erfindungsgemäße Ladevorrichtung 1 eine Steuer- und Regeleinrichtung 49 auf.

Mittels der Steuer- und Regeleinrichtung sind die elektrischen Antriebseinheiten sämtlicher Fördereinrichtungen 21 bis 28 sowie 41 der Ladevorrichtung 1 unabhängig voneinander ansteuerbar. Weiterhin wird der Steuer- und Regeleinrichtung 49 ein vorzugsweise elektrisches Messsignal des Sensormittels 47 der Fördereinrichtung 41 zugeführt, das zumindest die Positionen der Transporteinheiten 17,18,19 in der x- sowie der y-Richtung in Bezug auf die Grundfläche 11 des Frachtraums 5 repräsentiert. Auch die Messsignale der in den übrigen Fördereinrichtungen 21 bis 28 integrierten Sensormittel werden der Steuer- und Regeleinrichtung 49 zugeführt und dort zur Ansteuerung der elektrischen Antriebe der übrigen Fördereinrichtungen 21 bis 28 sowie 41 während des Beladungs- bzw. des Entladungsprozesses des Frachtraums 5 mit der erfindungsgemäßen Ladevorrichtung 1 ausgewertet.

Weiterhin kann ein menschlicher Operator mittels nicht näher dargestellter Bedien-und Steuerelemente auch Einfluss auf die Steuer- und Regeleinrichtung 49 nehmen und hierdurch den im Allgemeinen zumindest teilautomatisch ablaufenden Beladungs- bzw. den Entladungsvorgang des Frachtraums 5 mit den Frachteinheiten 17,18,19 im Bedarfsfall vollständig manuell steuern.

Die Sensormittel bzw. das Sensormittel 47 umfasst vorzugsweise mindestens eine Leuchtdiode 50 mit einer hohen Strahlungsintensität als Strahlungsquelle und mindestens eine Fotodiode 51 als Strahlungsdetektor. Anstatt einer oder mehrerer Fotodioden 51 kann das Sensormittel 47 auch einen oder mehrere Fototransistoren als Strahlungsdetektor aufweisen. Die Leuchtdiode 50 und die Fotodiode 51 arbeiten zur Unterdrückung von Störungen durch Streulicht und Lichtreflexe im sichtbaren Bereich bevorzugt mit Infrarotstrahlung. Anstatt einer oder mehrerer Leuchtdioden bzw. einer oder mehrerer Infrarotdioden können auch Laserdioden oder dergleichen verwendet werden.
Zur weiteren Verbesserung der Störsicherheit kann die von der Leuchtdiode 50 abgegebene Bestrahlung auch moduliert werden. In diesem Fall ist der Fotodiode 51 vorzugsweise ein Verstärker nachgeschaltet, der selektiv die modulierte Bestrahlung verstärkt.
Das Sensormittel 47 kann alternativ auch im Bereich des sichtbaren Lichts, beispielsweise in der Art von bekannten Positionsdetektoren für optische Zeigegeräte für grafische Benutzeroberflächen in der elektronischen Datenverarbeitung ("sogenannte optische Mäuse") arbeiten. Im Unterschied zu den vorbekannten Positionsdetektoren für Zeigegeräte für grafische Benutzeroberflächen in der elektronischen Datenverarbeitung werden bei der erfindungsgemäßen Ladevorrichtung 1 die Positionsdetektoren bzw. die oder das Sensormittel 47 nicht über die Grundfläche 11 des Frachtraums 5 bewegt, sondern es wird umgekehrt ein "Untergrund" in Form der Unterseiten der Frachteinheiten 17,18,19 über das Sensormittel 47 oder die Sensormittel der Fördereinrichtungen 21 bis 28 sowie 41 in der Art eines "optischen Trackballs" hinweg bewegt.

Mittels der Sensormittel 47 ist zum einen die Anwesenheit einer Frachteinheit 17,18,19 im Bereich der betreffenden Fördereinrichtung 21 bis 28 sowie 41 feststellbar. Befindet sich beispielsweise eine Frachteinheit 17,18,19 im Bereich der Fördereinrichtung 41, so wird die von der Leuchtdiode 50 abgegebene Strahlung von einer Unterseite der aufliegenden Frachteinheit 17,18,19 zu einem großen Anteil zurückreflektiert, sodass die Fotodiode 51 einen Anteil dieser reflektierten Strahlung auffängt und dieses "Besetztsignal" an die Steuer- und Regeleinrichtung 49 weiterleitet. In diesem Fall wird die elektrische Antriebseinheit der Transportrolle 44 kontrolliert von der Steuer- und Regeleinrichtung 49 aktiviert. Befindet sich umgekehrt keine Frachteinheit im Bereich der Fördereinrichtung 41, so wird die von der Leuchtdiode 50 emittierte Strahlung nicht reflektiert und die Leuchtdiode 50 gibt mangels ausreichender Beleuchtung kein "Besetztsignal" ab und die elektrische Antriebseinheit der betreffenden Transportrolle 44 bleibt ausgeschaltet. Dadurch, dass nur diejenigen Fördereinrichtungen 21 bis 28 sowie 41 von der Steuer- und Regeleinrichtung 49 aktiviert werden, in deren Bereich eine Frachteinheit 17,18,19 aufliegt, ergibt sich eine große Einsparung an elektrischer Energie.

Zum anderen lässt sich zugleich die Bewegung bzw. die Position einer Frachteinheit 17,18,19 oberhalb der Fördereinrichtungen 21 bis 28 sowie 41 durch das Sensormittel 47 bzw. die Sensormittel in Richtung der x-und der y-Achse in Bezug auf die Grundfläche 11 des Frachtraums 5 berührungslos erfassen. Alternativ kann das Sensormittel 47 bzw. können die übrigen Sensormittel auch eine Bewegung bzw. eine Position der Frachteinheiten 17,18,19 in der z-Richtung erfassen.
Die Erfassung der jeweiligen Positionen der Frachteinheiten 17,18,19 mittels der Sensormittel 47 bzw. der übrigen nicht näher dargestellten Sensormittel in der x-und der y-Richtung erfolgt hierbei in der Art und Weise der bekannten Positionsdetektoren für optische Zeigegeräte für grafische Benutzeroberflächen in der elektronischen Datenverarbeitung ("so genannte optische Mäuse").
Die Ermittlung der Entfernung einer Frachteinheit 17,18,19 von der Grundfläche 11 des Frachtraums 5 in der z-Richtung des Koordinatensystems 40 kann beispielsweise durch Laufzeitmessungen oder die Ermittlung von Reflexionswinkeln der von der Leuchtdiode 50 abgegebenen und von den Unterseiten der Frachteinheiten 17,18,19 reflektierten Strahlung erfolgen, die von der Fotodiode 51 aufgefangen und entsprechend ausgewertet werden kann. Die Auswertung der von der Fotodiode 51 empfangenen Strahlung erfolgt mittels komplexer mathematischer Algorithmen. Zu diesem Zweck können die Sensormittel selbst mit leistungsstarken Rechnereinheiten ausgestattet sein, die eine entsprechende Vorverarbeitung der Messsignale, unabhängig von der Steuer- und Regeleinrichtung, vornehmen.

Die erfindungsgemäße Ladevorrichtung 1 weist eine Vielzahl von Fördereinrichtungen 21 bis 28 sowie 41 auf, die jeweils mit berührungslos arbeitenden optischen Sensormitteln in Entsprechung zum Sensormittel 47 ausgestattet sind, die die zumindest gleichzeitige Ermittlung der Position der Frachteinheiten 17,18,19 in der x-und der y-Richtung in Bezug auf die Grundfläche 11 des Frachtraums 5 in der Form eines Messsignals ermöglichen. Die Messsignale der Sensormittel, einschließlich des Sensormittels 47, repräsentieren hierbei zumindest die Positionen der Frachteinheiten 17,18,19 in Richtung der x- und y- Achse in Bezug auf die Grundfläche 5 des Frachtraums 11. Hierdurch wird insbesondere eine kontrollierte Drehung, wie beispielsweise durch den Drehpfeil 38 in der Fig. 1 angedeutet, der Frachteinheiten 17,18,19 um eine Hochachse, parallel zu der z-Achse, im Bereich der Kugelmatte 16 wesentlich erleichtert, die insbesondere bei beengten Platzverhältnissen im Frachtraum 5 zunehmend an Bedeutung gewinnt.
Die von den einzelnen Sensormitteln ermittelten Messsignale der Positionen der Frachteinheiten 17,18,19 in der x- und der y-Richtung werden zur Kontrolle und Überwachung des gesamten Lade- und Entladeprozesses der Steuer- und Regeleinrichtung 49 zugeführt, die nach der Auswertung der Messsignale die elektrischen Antriebseinheiten der Fördereinrichtungen 21 bis 28 sowie 41 entsprechend zur Positionierung der Frachteinheiten 17,18,19 auf der Grundfläche 11 des Frachtraums 5 individuell ansteuert. Zur weiteren Optimierung des gesamten Lade- und Entladeprozesses lassen sich darüber hinaus mittels der Sensormittel zusätzlich auch Geschwindigkeitswerte und Beschleunigungswerte der einzelnen Frachteinheiten 17,18,19 ermitteln. Darüber hinaus lassen sich durch die Sensormittel gegebenenfalls zumindest auch die Positionen der Frachteinheiten 17,18,19 in der z-Richtung in Bezug zur Grundfläche 11 ermitteln. Durch eine geeignete Ansteuerung der Fördereinrichtungen 21 bis 28 sowie 41 lassen sich die Frachteinheiten 17,18,19 nicht nur entlang der x- sowie parallel der y-Achse auf der Grundfläche 11 positionieren. Vielmehr sind durch eine gleichzeitige Ansteuerung von (Längs-) und (Quer-) Fördereinrichtungen 21 bis 28 sowie 41 nahezu beliebige Bewegungsbahnen auf der Grundfläche 11 des Frachtraums 5 realisierbar, soweit die Führungsmittel diese zulassen.

Der berührungslose optische Betrieb der Sensormittel ermöglicht hierbei einen sehr störsicheren, gleichzeitig weitgehend wartungsfreien und zumindest teilautomatischen Betrieb der erfindungsgemäßen Ladevorrichtung 1, der mit minimalem Personaleinsatz möglich ist.

### Bezugszeichenliste

- 1: Ladevorrichtung
- 2: Heckbereich
- 3: Flugzeug
- 4: Koordinatensystem
- 5: Frachtraum
- 6: Frachtraumwand
- 7: Frachtraumwand
- 8: Frachtraumwand
- 9: Frachtraumwand
- 10: Ladetor
- 11: Grundfläche
- 12: Rollenbahn
- 13: Rollenbahn
- 14: Rollenbahn
- 15: Rollenbahn
- 16: Kugelmatte
- 17: Frachteinheit
- 18: Frachteinheit
- 19: Frachteinheit
- 20: Oberseite
- 21: Fördereinrichtung
- 22: Fördereinrichtung
- 23: Fördereinrichtung
- 24: Fördereinrichtung
- 25: Fördereinrichtung
- 26: Fördereinrichtung
- 27: Fördereinrichtung
- 28: Fördereinrichtung
- 29: Transportrolle
- 30: Transportrolle
- 31: Transportrolle
- 32: Transportrolle
- 33: Transportrolle
- 34: Transportrolle
- 35: Transportrolle
- 36: Transportrolle
- 37: Pfeil
- 38: Drehpfeil
- 39: Pfeil
- 40: Koordinatensystem
- 41: Fördereinrichtung
- 42: Gehäuse
- 43: Flansch
- 44: Transportrolle
- 45: Drehachse
- 46: Drehpfeile
- 47: Sensormittel
- 48: Doppelpfeil
- 49: Steuer- und Regeleinrichtung
- 50: Leuchtdiode
- 51: Fotodiode

## Patentansprüche

1. Ladevorrichtung (1) zum zumindest teilautomatischen Beladen und Entladen eines Frachtraums (5) eines Luftfahrzeuges mit mindestens einer Fördereinrichtung (21-28,41) zur Positionierung von Frachteinheiten (17,18,19) im Bereich einer Grundfläche (11) des Frachtraums (5) und mit mindestens einem Führungsmittel sowie mit mindestens einer Bewegungshilfe im Bereich der Grundfläche (11) des Frachtraums (5), **dadurch gekennzeichnet, dass** jede Fördereinrichtung (21-28,41) mindestens ein Sensormittel (47) aufweist, wobei mittels des Sensormittels (47) oder der Sensormittel die Anwesenheit einer Frachteinheit (17,18,19) im Bereich der Fördereinrichtung (21-28,41) berührungslos erfassbar ist und die Position sowie die Geschwindigkeit einer Frachteinheit (17,18,19) auf der Grundfläche (11) des Frachtraums (5) in mindestens zwei Raumdimensionen berührungslos ermittelbar sind, wobei die Fördereinrichtungen (21-28,41) in Abhängigkeit von Messsignalen des Sensormittels (47) oder der Sensormittel mittels einer Steuer- und Regeleinrichtung (49) derart ansteuerbar sind, dass eine Frachteinheit (17,18,19) beliebig auf der Grundfläche (11) des Frachtraums (5) positionierbar ist, soweit die Führungsmittel dies zulassen.

2. Ladevorrichtung (1) nach Anspruch 1, **dadurch gekennzeichnet, dass** mittels des Sensormittels (47) oder der Sensormittel die Beschleunigung einer Frachteinheit (17,18,19) auf der Grundfläche (11) des Frachtraums (5) in mindestens zwei Raumdimensionen berührungslos erfassbar ist.

3. Ladevorrichtung (1) nach einem der Ansprüche 1 oder 2, **dadurch gekennzeichnet, dass** das Sensormittel (47) oder die Sensormittel mit berührungslos wirkenden Komponenten, insbesondere mit optoelektronischen Komponenten, gebildet sind.

4. Ladevorrichtung (1) nach einem der Ansprüche 1 bis 3, **dadurch gekennzeichnet, dass** das Sensormittel (47) oder die Sensormittel mindestens eine, eine Messstrahlung mit hoher Intensität abgebende Strahlungsquelle, insbesondere eine Leuchtdiode (50), eine Infrarotdiode oder eine Laserdiode, aufweisen.

5. Ladevorrichtung (1) nach einem der Ansprüche 1 bis 4, **dadurch gekennzeichnet, dass** die von der Strahlungsquelle abgegebene Messstrahlung zur Unterdrückung von Störungen modulierbar ist.

6. Ladevorrichtung (1) nach einem der Ansprüche 1 bis 5, **dadurch gekennzeichnet, dass** das Sensormittel (47) oder die Sensormittel einen Strahlungsdetektor, insbesondere eine Fotodiode (51), einen Fototransistor oder dergleichen, zur Auswertung der von einer Unterseite der Frachteinheit (17,18,19) reflektierten Messstrahlung aufweisen.

7. Ladevorrichtung (1) nach einem der Ansprüche 1 bis 6, **dadurch gekennzeichnet, dass** mittels des Strahlungsdetektors aus der von einer Unterseite der Frachteinheit (17,18,19) reflektierten Messstrahlung die Anwesenheit einer Frachteinheit (17,18,19) und/oder mindestens die Position sowie die Geschwindigkeit einer Frachteinheit (17,18,19) auf der Grundfläche (11) des Frachtraums (5) ermittelbar ist.

8. Ladevorrichtung (1) nach einem der Ansprüche 1 bis 7, **dadurch gekennzeichnet, dass** die Fördereinrichtungen (21-28,41) mindestens ein Förderorgan, insbesondere mindestens eine angetriebene und rutschhemmend ausgebildete Transportrolle (29-36,44), aufweisen.

9. Ladevorrichtung (1) nach einem der Ansprüche 1 bis 8, **dadurch gekennzeichnet, dass** die Bewegungshilfen insbesondere mit Rollenbahnen (12-15) und/oder mit Kugelmatten (16) zur Erleichterung der Bewegung der Frachteinheiten (17,18,19) auf der Grundfläche (5) des Frachtraums (11) gebildet sind.

10. Ladevorrichtung (1) nach einem der Ansprüche 1 bis 9, **dadurch gekennzeichnet, dass** in das oder die Führungsmittel an den Frachteinheiten (17,18,19) angeordnete Führungsorgane einbringbar sind, um die Frachteinheiten (17,18,19) bei der Positionierung auf der Grundfläche (11) des Frachtraums (5) zumindest abschnittsweise zu führen und nach Abschluss der Positionierung gegen Verrutschen zu sichern.

11. Fördereinrichtung (21-28,41), insbesondere für eine Ladevorrichtung (1) nach einem der Ansprüche 1 bis 10, mit mindestens einem Förderorgan, insbesondere mit mindestens einer angetriebenen Transportrolle (29-36,44), **dadurch gekennzeichnet, dass** jede Fördereinrichtung (21-28,41) mindestens ein Sensormittel (47) aufweist, wobei mittels des Sensormittels (47) oder der Sensormittel die Anwesenhelt einer Frachteinheit (17,18,19) im Bereich der Fördereinrichtung (21-28,41) berührungslos erfassbar ist und die Position sowie die Geschwindigkeit einer Frachteinheit (17,18,19) auf der Grundfläche (11) eines Frachtraums in mindestens zwei Raumdimensionen berührungslos erfassbar ist.

## Claims

1. Loading device (1) for the at least partially automated loading and unloading of a cargo hold (5) of an aircraft comprising at least one conveying system (21-28, 41) for positioning cargo units (17, 18, 19) in the area of a floor area (11) of the cargo hold (5) and at least one guiding unit and at least one movement aid in the area of the floor area (11) of the cargo hold (5), **characterised in that** each conveying system (21-28, 41) comprises at least one sensor (47), wherein the presence of a cargo unit (17, 18, 19) in the area of the conveying system (21-28, 41) can be detected in a contactless manner by means of the sensor (47) or sensors and the position and the speed of a cargo unit (17, 18, 19) on the floor area (11) of the cargo hold (5) can be determined in a contactless manner in at least two spatial dimensions, wherein the conveying systems (21-28, 41) can be actuated as a function of measuring signals of the sensor (47) or sensors by means of a control and regulation system (49) in such a way that a cargo unit (17, 18, 19) can be positioned as desired on the floor area (11) of the cargo hold (5) as far as the guiding units permit this.

2. Loading device (1) according to claim 1, **characterised in that** the acceleration of a cargo unit (17, 18, 19) on the floor area (11) of the cargo hold (5) can be detected in a contactless manner in at least two spatial dimensions by means of the sensor (47) or sensors.

3. Loading device (1) according to claim 1 or claim 2, **characterised in that** the sensor (47) or sensors are composed of components acting contactlessly, in particular optoelectronic components.

4. Loading device (1) according to any one of claims 1 to 3, **characterised in that** the sensor (47) or sensors comprise at least one radiation source emitting high-intensity measuring radiation, in particular a light-emitting diode (50), an infrared diode or a laser diode.

5. Loading device (1) according to any one of claims 1 to 4, **characterised in that** the measuring radiation emitted by the radiation source can be modulated to suppress interference.

6. Loading device (1) according to any one of claims 1 to 5, **characterised in that** the sensor (47) or sensors comprise a radiation detector, in particular a photodiode (51), phototransistor or the like, for evaluating the measuring radiation reflected from an underside of the cargo unit (17, 18, 19).

7. Loading device (1) according to any one of claims 1 to 6, **characterised in that**, by means of the radiation detector, the presence of a cargo unit (17, 18, 19) and/or at least the position and the speed of a cargo unit (17, 18, 19) on the floor area (11) of the cargo hold (5) can be determined from the measuring radiation reflected from an underside of the cargo unit (17, 18, 19).

8. Loading device (1) according to any one of claims 1 to 7, **characterised in that** the conveying systems (21-28, 41) comprise at least one conveying organ, in particular at least one driven and anti-slip transport roller (29-36, 44).

9. Loading device (1) according to any one of claims 1 to 8, **characterised in that** the movement aids are in particular composed of roller paths (12-15) and/or ball mats (16) to facilitate the movement of cargo units (17, 18, 19) on the floor area (5) of the cargo hold (11).

10. Loading device (1) according to any one of claims 1 to 9, **characterised in that** conveying organs can be inserted into the guiding unit or guiding units arranged on the cargo units (17, 18, 19) in order to guide the cargo units (17, 18, 19) at least in sections during positioning on the floor area (11) of the cargo hold (5) and to secure them against slipping after positioning.

11. Conveying system (21-28, 41), in particular for a loading device (1) according to any one of claims 1 to 10, with at least one conveying organ, in particular with at least one drive transport roller (29-36, 44), **characterised in that** each conveying system (21-28, 41) comprises at least one sensor (47), wherein by means of the sensor (47) or sensors, the presence of a cargo unit (17, 18, 19) in the area of the conveying system (21-28, 41) can be detected in a contactless manner and the position and the speed of a cargo unit (17, 18, 19) on the floor area (11) of a cargo hold can be detected in a contactless manner in at least two spatial dimensions.

## Revendications

1. Dispositif de chargement (1) pour le chargement et le déchargement, au moins en partie automatiques, d'une soute à fret (5) d'un aéronef, comprenant au moins un dispositif de transport (21 - 28, 41) pour le positionnement d'unités de fret (17, 18, 19) dans la zone d'une surface de base (11) de la soute (5) et au moins un moyen de guidage, ainsi qu'au moins une aide au déplacement dans la zone de la surface de base (11) de la soute à fret (5), **caractérisé en ce que** chaque dispositif de transport (21 - 28, 41) présente au moins un moyen de détection (47), la présence d'une unité de fret (17, 18, 19) dans la zone du dispositif de transport (21 - 28, 41) étant détectable sans contact à l'aide du moyen de détection (47) ou des moyens de détection et la position ainsi que la vitesse d'une unité de fret (17, 18, 19) sur la surface de base (11) de la soute à fret étant déterminables sans contact dans au moins deux dimensions spatiales, les dispositifs de transport (21 - 28, 41) étant contrôlables au moyen d'un dispositif de commande et de réglage (49), en fonction de signaux de mesure du moyen de détection (47) ou des moyens de détection, de telle sorte qu'une unité de fret (17, 18, 19) est positionnable de façon quelconque sur la surface de base (11) de la soute à fret (5), dans la mesure où les moyens de guidage l'autorisent.

2. Dispositif de chargement (1) suivant la revendication 1, **caractérisé en ce que** l'accélération d'une unité de fret (17, 18, 19) sur la surface de base (11) de la soute à fret (5) est détectable sans contact dans au moins deux dimensions spatiales à l'aide du moyen de détection (47) ou des moyens de détection.

3. Dispositif de chargement (1) suivant l'une des revendications 1 et 2, **caractérisé en ce que** le moyen de détection (47) ou les moyens de détection sont formés de composants agissant sans contact, en particulier de composants optoélectroniques.

4. Dispositif de chargement (1) suivant l'une des revendications 1 à 3, **caractérisé en ce que** le moyen de détection (47) ou les moyens de détection présentent au moins une source de rayonnement, émettant un rayonnement de mesure de haute intensité, en particulier une diode électroluminescente (50), une diode infrarouge ou une diode laser.

5. Dispositif de chargement (1) suivant l'une des revendications 1 à 4, **caractérisé en ce que** le rayonnement de mesure, émis par la source de rayonnement, est modulable pour la suppression de parasites.

6. Dispositif de chargement (1) suivant l'une des revendications 1 à 5, **caractérisé en ce que** le moyen de détection (47) ou les moyens de détection présentent un détecteur de rayonnement, en particulier une photodiode (51), un phototransistor ou analogues, pour l'évaluation du rayonnement de mesure réfléchi par un côté inférieur de l'unité de fret (17, 18, 19).

7. Dispositif de chargement (1) suivant l'une des revendications 1 à 6, **caractérisé en ce que** la présence d'une unité de fret (17, 18, 19) et/ou au moins la position ainsi que la vitesse d'une unité de fret (17, 18, 19) sur la surface de base (11) de la soute à fret (5) sont déterminables au moyen du détecteur de rayonnement, à partir du rayonnement de mesure réfléchi par un côté inférieur de l'unité de fret (17, 18, 19).

8. Dispositif de chargement (1) suivant l'une des revendications 1 à 7, **caractérisé en ce que** les dispositifs de transport (21 - 28, 41) présentent au moins un organe de transport, en particulier au moins un rouleau de transport (29 - 36, 44) entraîné et de réalisation antidérapante.

9. Dispositif de chargement (1) suivant l'une des revendications 1 à 8, **caractérisé en ce que** les aides au déplacement sont formées en particulier de transporteurs à galets (12 - 15) et/ou de mats à billes (16) pour faciliter le déplacement des unités de fret (17, 18, 19) sur la surface de base (5) de la soute à fret (11).

10. Dispositif de chargement (1) suivant l'une des revendications 1 à 9, **caractérisé en ce que** des organes de guidage, disposés sur les unités de fret (17, 18, 19), peuvent être introduits dans le ou les moyens de guidage, pour guider au moins par sections les unités de fret (17, 18, 19) lors du positionnement sur la surface de base (11) de la soute à fret (5) et les bloquer contre le dérapage à la fin du positionnement.

11. Dispositif de transport (21 - 28, 41), en particulier pour un dispositif de chargement (1) suivant l'une des revendications 1 à 10, comprenant au moins un organe de transport, en particulier au moins un rouleau de transport (29 - 36, 44) entraîné, **caractérisé en ce que** chaque dispositif de transport (21 - 28, 41) présente au moins un moyen de détection (47), la présence d'une unité de fret (17, 18, 19) dans la zone du dispositif de transport (21 - 28, 41) étant détectable sans contact à l'aide du moyen de détection (47) ou des moyens de détection, et la position ainsi que la vitesse d'une unité de fret (17, 18, 19) sur la surface de base (11) d'une soute à fret étant détectables sans contact dans au moins deux dimensions spatiales d'une soute à fret.
